# EUROPÄISCHE PATENTANMELDUNG

(11) **EP 2 839 950 A2**
(43) Veröffentlichungstag der Anmeldung: **25.02.2015**
(21) Anmeldenummer: 14177813.4
(22) Anmeldetag: 21.07.2014
(51) Int. Cl.: B30B 11/02, B30B 11/00

(54) **Presse zur Herstellung von Presslingen aus pulverförmigem Material**

(30) Priorität: 23.08.2013 DE 102013109157
(71) Anmelder: Fette Compacting GmbH, 21493 Schwarzenbek (DE)
(72) Erfinder: Pannewitz, Thomas, 21514 Klein Pampau (DE); Behns, Holger, 21465 Reinbek (DE)
(74) Vertreter: Hauck Patentanwaltspartnerschaft mbB

(57) **Zusammenfassung**

Die Erfindung betrifft eine Presse zur Herstellung von Presslingen aus pulverförmigem Material, umfassend mindestens eine Matrize mit einem den Pressling abbildenden Formhohlraum, mindestens einen Oberstempel und mindestens einen Unterstempel, die mit dem Formhohlraum zur Bildung des Presslings zusammenwirken, und mindestens einen elektrischen Antrieb (30,31,42,43) zum Antreiben des Oberstempels und/oder des Unterstempels und/oder der Matrize entlang einer Hauptpressachse, wobei die Presse weiterhin mindestens ein auf die Matrize und/oder den Formhohlraum der Matrize wirkendes bewegbares Element (64,66) umfasst, wobei mindestens ein elektrohydrostatischer Antrieb (68)vorgesehen ist zum Antreiben des mindestens einen bewegbaren Elements (64,66).

## Beschreibung

Die Erfindung betrifft eine Presse zur Herstellung von Presslingen aus pulverförmigem Material, umfassend mindestens eine Matrize mit einem den Pressling abbildenden Formhohlraum, mindestens einen Oberstempel und mindestens einen Unterstempel, die mit dem Formhohlraum zur Bildung des Presslings zusammenwirken, und mindestens einen elektrischen Antrieb zum Antreiben des Oberstempels und/oder des Unterstempels und/oder der Matrize entlang einer Hauptpressachse.

Eine Presse zur Herstellung von Presslingen aus pulverförmigem Material ist beispielsweise bekannt aus DE 10 2006 020 213 B4. Dabei ist die Matrize auf einem Matrizentisch drehbar gelagert und auf dem Matrizentisch ist ein Verstellzylinder angeordnet, der über eine mechanische Umlenkung in Drehantriebsverbindung mit der Matrize steht. Mit der bekannten Presse können zum Beispiel gedrillte, schräg verzahnte oder sonstige Teile hergestellt werden. Sowohl die Hauptantriebe für die Pressstempel als auch der Antrieb für die Drehung der Matrize sind hydraulische Antriebe.

Weiterhin ist aus DE 10 2010 048 183 A1 eine Presse zur Herstellung eines Formlings aus pulverförmigen Material bekannt, bei der mehrere Antriebe über eine mechanische Umlenkung um 90° auf Querstempel wirken, die entlang einer quer zur Hauptpressachse verlaufenden Querachse mit dem Formhohlraum der Matrize zusammenwirken. Die Antriebe zum Antreiben der Querstempel können sowohl elektrische Antriebe sein als auch hydraulische Antriebe. Eine derartige mechanische Umlenkung eines auf einen Querstempel wirkenden Antriebs ist auch bekannt aus EP 2 103 423 A1. Mit solchen Querstempeln lassen sich Presslinge erzeugen, die Querbohrungen oder seitliche Vertiefungen aufweisen.

Insbesondere bei Pressen mit elektrischen Antrieben für die Pressachsen gibt es bislang keine zufriedenstellende Lösung, hohe Kräfte auf einem kleinen Bauraum zur Verfügung zu stellen. Elektrische Antriebe benötigen einen erheblichen Bauraum. Um dieser Problematik zu begegnen, werden elektrische Antriebe häufig in einiger Entfernung von der Matrize angeordnet. Die im Stand der Technik dann häufig vorgesehenen mechanischen Umlenkungen führen zu unerwünschten Regelungsungenauigkeiten, einem komplexen Aufbau und erhöhtem Verschleiß. Die im Stand der Technik alternativ zu elektrischen Antrieben vorgesehenen hydraulischen Antriebe bedürfen eines hohen hydraulischen Aufwands, insbesondere hinsichtlich des Hydraulikaggregats, der Ventile etc., und sind schwieriger zu regeln als elektrische Antriebe. Das Vorsehen unterschiedlicher Antriebe, beispielsweise elektrischer Antriebe für die Hauptpressachsen und hydraulischer Antriebe für Querpressachsen, führt zu Uneinheitlichkeiten hinsichtlich der Regelungstechnik und des Sicherheitskonzeptes der Presse.

Der Erfindung liegt ausgehend von dem erläuterten Stand der Technik die Aufgabe zugrunde, bei zusätzlich zu den entlang der Hauptpressachse bewegten Ober- und/oder Unterstempeln vorgesehenen weiteren Verstellelementen oder Stempeln den Aufbau der Presse zu vereinfachen, den Bauraum zu verringern und die Regelungstechnik zu verbessern.

Die Erfindung löst die Aufgabe durch den Gegenstand von Anspruch 1. Vorteilhafte Ausgestaltungen finden sich in den abhängigen Ansprüchen, der Beschreibung und den Figuren.

Für eine Presse der eingangs genannten Art löst die Erfindung die Aufgabe dadurch, dass die Presse weiterhin mindestens ein auf die Matrize und/oder den Formhohlraum der Matrize wirkendes bewegbares Element umfasst, wobei mindestens ein elektrohydrostatischer Antrieb vorgesehen ist zum Antreiben des mindestens einen bewegbaren Elements.

Mit der erfindungsgemäßen Presse können Presslinge aus Metallpulver für ein anschließendes Sinterverfahren hergestellt werden, zum Beispiel für die Produktion von Werkzeugen oder dergleichen. Die erfindungsgemäße Presse kann in an sich bekannter Weise eine Matrizenplatte mit der Matrize aufweisen. Die Ober- und/oder Unterstempel können an oberen und/oder unteren Stempelplatten angeordnet sein. Die Presse kann einen Pressenrahmen besitzen, in dem die vorgenannten Elemente der Presse angeordnet sind. Die Presse besitzt eine geeignete Füllvorrichtung, mit der das Pulvermaterial in den Formhohlraum der Matrize gefüllt wird. Durch den oder die elektrischen Antriebe werden der Ober- und/oder der Unterstempel und/oder die Matrize bzw. eine diese gegebenenfalls aufweisende Matrizenplatte entlang der Hauptpressachse verfahren, so dass das in die Matrize gefüllte Pulvermaterial in dem Formhohlraum verpresst wird. Es ist also sowohl das Ausstoßverfahren möglich, bei dem die Matrize stationär angeordnet ist und die Ober- und Unterstempel verfahren werden als auch das Abzugsverfahren, bei dem der Unterstempel stationär angeordnet ist und der Oberstempel sowie die Matrize bzw. eine diese gegebenenfalls aufweisende Matrizenplatte verfahren werden. Die Hauptpressachse ist beispielsweise in vertikaler Richtung angeordnet.

Der oder die elektrischen Antriebe für die Hauptpressachse können zum Beispiel elektrische Spindelantriebe sein. Dabei kann ein Elektromotor eine beispielsweise axial feststehende Spindel drehend antreiben. Dadurch wird eine auf der Spindel laufende Spindelmutter in Axialrichtung der Spindeln verfahren. Die Spindelmutter wirkt in der Regel über eine Kraftübertragungseinrichtung auf die obere und/oder untere Stempelplatte und verfährt mit dieser zusammen den Oberstempel und/oder den Unterstempel in Richtung der Hauptpressachse, die parallel beabstandet oder koaxial zur Längsachse der mindestens einen Spindel verläuft. Dabei können sowohl der Oberstempel als auch der Unterstempel verfahren werden oder nur einer von Oberstempel und Unterstempel. Es können zum Beispiel zwei obere und/oder zwei untere derartige elektrische Antriebe vorgesehen sein, die jeweils gemeinsam zum Beispiel auf eine obere Stempelplatte und/oder eine untere Stempelplatte wirken. Die Kraftübertragungseinrichtung kann dann zum Beispiel eine in horizontaler Richtung verlaufende Kraftübertragungsbrücke sein, an deren gegenüberliegenden Enden die Spindelmuttern derart gelagert sind, dass sie die Kraftübertragungsbrücke in vertikaler Richtung verfahren.

Erfindungsgemäß ist mindestens ein weiteres auf die Matrize und/oder den Formhohlraum der Matrize wirkendes bewegbares Element vorgesehen, welches durch mindestens einen elektrohydrostatischen Antrieb bewegt wird. Es können insbesondere mehrere solche bewegbaren Elemente und entsprechend mehrere solche elektrohydrostatischen Antriebe vorgesehen sein. Dabei kann jeweils ein elektrohydrostatischer Antrieb für jeweils ein bewegbares Element vorgesehen sein. Es ist aber auch denkbar, dass ein elektrohydrostatischer Antrieb mehrere bewegbare Elemente antreibt. Erfindungsgemäß ist also eine bzw. sind mehrere elektrohydrostatisch angetriebene Zusatzachsen vorgesehen. Elektrohydrostatische Antriebe sind an sich bekannt. In der Regel besitzen sie einen Hydraulikzylinder, der über eine Hydraulikpumpe betätigt wird. Die Hydraulikpumpe wiederum wird von einem elektrischen Motor angetrieben. Elektrostatische Antriebe verhalten sich regelungstechnisch wie rein elektrische Antriebe. Der elektrische Motor des elektrohydrostatischen Antriebs kann für die Regelung daher in gleicher Weise angesteuert werden wie die für die Hauptpressachse vorgesehenen elektrischen Antriebe. Es kann also ein einheitliches regelungstechnisches Konzept in der Presse verwirklicht werden. Auch kann aufgrund der Verwendung einheitlicher Antriebstypen ein einheitliches sicherheitstechnisches Konzept realisiert werden. Erfindungsgemäß werden die Vorteile hydraulischer Antriebe einerseits, insbesondere die bei hoher Kraftaufbringung kompakte Bauweise, und die Vorteile elektrischer Antriebe, insbesondere die einfache und präzise Regelung elektrischer Antriebe, miteinander kombiniert. Die Vorteile der beiden an sich bekannten Antriebsarten werden für eine Presse genutzt, ohne deren jeweilige Nachteile zu implementieren. Auf mechanische Umlenkungen zwischen den elektrohydrostatischen Antrieben und den durch diese angetriebenen bewegbaren Elemente kann verzichtet werden. Die Präzision der Regelung wird erhöht, der Aufbau vereinfacht sich und der Verschleiß verringert sich.

Es ist auch möglich, dass die Matrize der Presse beispielsweise entlang der Richtung der Hauptpressachse längsgeteilt aus mehreren Komponenten bzw. Segmenten besteht, es sich also um eine sogenannte geteilte Matrize handelt. In diesem Fall können durch die erfindungsgemäß vorgesehenen elektrohydrostatischen Antriebe die Komponenten bzw. Segmente der Matrize angetrieben werden. In diesem Fall können die Komponenten bzw. Segmente der Matrize selbst die erfindungsgemäß vorgesehenen bewegbaren Elemente bilden.

Das mindestens eine bewegbare Element kann mindestens ein Verstellelement zum Verstellen der Matrize und/oder mindestens ein auf den Formhohlraum der Matrize wirkender weiterer Stempel sein. Das Verstellelement kann beispielsweise vorgesehen sein, um die Matrize während des Verpressens zu bewegen, beispielsweise zu drehen. Das mindestens eine bewegbare Element kann mittels des mindestens einen elektrohydrostatischen Antriebs entlang einer unter einem Winkel zur Hauptpressachse verlaufenden Achse, bevorzugt einer quer zur Hauptpressachse verlaufenden Querachse, bewegbar sein. Insbesondere wenn das weitere bewegbare Element ein weiterer Pressstempel ist, können auf diese Weise zum Beispiel Querbohrungen, seitliche Vertiefungen oder Hinterschnitte in dem Pressling erzeugt werden. Gerade für unter einem Winkel zur Hauptpressachse verlaufende Achsen, beispielsweise Querachsen, entfaltet die erfindungsgemäße Lehre die Vorteile geringen Bauraums, einfacher Regelung und hoher Regelgenauigkeit besonders wirksam.

Alternativ ist es auch möglich, dass das mindestens eine bewegbare Element ein zusätzlicher Oberstempel und/oder ein zusätzlicher Unterstempel ist, der durch den mindestens einen elektrohydrostatischen Antrieb parallel zur Hauptpressachse bewegbar ist.

Nach einer weiteren Ausgestaltung kann vorgesehen sein, dass die Bewegung des mindestens einen elektrohydrostatischen Antriebs zum Antreiben des mindestens einen bewegbaren Elements und die Bewegung des mindestens einen elektrischen Antriebs zum Antreiben des Oberstempels und/oder des Unterstempels entlang der Hauptpressachse durch eine gemeinsame Regelungseinrichtung geregelt wird. Es wird also eine einheitliche Regelung für die elektrischen Antriebe entlang der Hauptpressachse und den oder die elektrohydrostatischen Antriebe für die weiteren bewegbaren Elemente realisiert. Insbesondere kann eine einheitliche Regelung für sämtliche Antriebe der Presse realisiert werden. Aufgrund der Nutzung elektrischer Antriebe für das Antreiben der Ober- und/oder Unterstempel entlang der Hauptpressachse einerseits und der Nutzung elektrohydrostatischer Antriebe für die Bewegung des mindestens einen bewegbaren Elements kann in beiden Fällen ein elektrischer Motor für die Regelung angesteuert werden.

Der mindestens eine elektrohydrostatische Antrieb, insbesondere ein Hydraulikzylinder des elektrohydrostatischen Antriebs, kann ohne mechanische Umlenkung auf das mindestens eine bewegbare Element wirken. Insbesondere ist es also möglich, dass zwischen einem Hydraulikzylinder des elektrohydrostatischen Antriebs und dem bewegbaren Element kein Getriebe vorgesehen ist. Wie bereits erläutert, beanspruchen elektrohydrostatische Antriebe, insbesondere ihre Hydraulikzylinder, einen geringen Bauraum bei hoher Krafterzeugung. Damit können sie in einfacher Weise in die Presse integriert werden, insbesondere innerhalb eines Pressenrahmens angeordnet werden. Aufwendige mechanische Umlenkungen, wie beim Stand der Technik vorgesehen, sind nicht erforderlich.

Nach einer weiteren Ausgestaltung kann vorgesehen sein, dass mindestens ein auf das mindestens eine bewegbare Element wirkender Hydraulikzylinder des mindestens einen elektrohydrostatischen Antriebs räumlich getrennt von mindestens einer den mindestens einen Hydraulikzylinder betätigenden Hydraulikpumpe und mindestens einem die Hydraulikpumpe antreibenden elektrischen Motor angeordnet ist, wobei der mindestens eine Hydraulikzylinder und die mindestens eine Hydraulikpumpe über eine Hydraulikzuleitung und eine Hydraulikableitung miteinander verbunden sind. Die Hydraulikzuleitung und die Hydraulikableitung können insbesondere flexibel sein. Durch eine derartige Trennung von Aktor und Krafterzeuger ergeben sich besonders flexible Einbaumöglichkeiten des elektrohydrostatischen Antriebs und damit kleinere Baugrößen eines Pressenrahmens und damit einer Presse. Indem der Hydraulikzylinder von der Hydraulikpumpe und dem die Hydraulikpumpe antreibenden elektrischen Motor getrennt wird, erhöht sich die Flexibilität hinsichtlich Aufbau und Anordnung des elektrohydrostatischen Antriebs. Durch flexible Hydraulikleitungen können die beiden getrennten Komponenten des elektrohydrostatischen Antriebs weitgehend frei zueinander positioniert werden. Selbstverständlich sind auch starre Hydraulikleitungen möglich.

Es kann weiter vorgesehen sein, dass die Presse einen Pressenrahmen aufweist, innerhalb dessen eine die Matrize aufweisende Matrizenplatte, der mindestens eine Oberstempel sowie der mindestens eine Unterstempel angeordnet sind, wobei der mindestens eine elektrische Antrieb innerhalb des Pressenrahmens oder an dem Pressenrahmen angeordnet ist, und wobei der mindestens eine Hydraulikzylinder des elektrohydrostatischen Antriebs innerhalb des Pressenrahmens angeordnet ist, und die mindestens eine den mindestens einen Hydraulikzylinder betätigende Hydraulikpumpe sowie der mindestens eine die Hydraulikpumpe antreibende elektrische Motor außerhalb des Pressenrahmens angeordnet sind. Es wird also nur der per se einen geringen Bauraum beanspruchende Hydraulikzylinder innerhalb des Pressenrahmens angeordnet. Die gegebenenfalls größeren Antriebskomponenten für den Hydraulikzylinder werden außerhalb des Pressenrahmens positioniert. Die mindestens eine Hydraulikpumpe sowie der mindestens eine sie antreibende elektrische Motor können zum Beispiel an der Außenseite des Pressenrahmens befestigt werden.

Nach einer weiteren Ausgestaltung kann der Hydraulikzylinder auf der Matrizenplatte befestigt sein. Insbesondere wird bei dieser Ausgestaltung der feststehende Teil des Hydraulikzylinders auf der Matrizenplatte befestigt, zum Beispiel das Zylindergehäuse. Der Zylinderkolben ist dann relativ zu dem feststehenden Teil und damit relativ zu der Matrizenplatte zum Antreiben des mindestens einen bewegbaren Elements beweglich. Es wird eine sichere und einfache Befestigung des Hydraulikzylinders innerhalb des Pressenrahmens erreicht, insbesondere wenn er ein Verstellelement zum Verstellen der Matrize oder einen auf den Formhohlraum der Matrize wirkenden weiteren Stempel antreibt.

Ein Ausführungsbeispiel der Erfindung wird nachfolgend anhand von Figuren näher erläutert. Es zeigen schematisch:
- Fig. 1: eine erfindungsgemäße Presse in einer ersten perspektivischen Ansicht,
- Fig. 2: die Presse aus Fig. 1 in einer zweiten perspektivischen Ansicht, und
- Fig. 3: einen bei der Presse aus Fig. 1 eingesetzten elektrohydrostatischen Antrieb in einer perspektivischen Ansicht.

Soweit nichts anderes angegeben ist, bezeichnen in den Figuren gleiche Bezugszeichen gleiche Gegenstände. Die erfindungsgemäße Presse besitzt einen Pressenrahmen 10 mit einer oberen Halteplatte 12 und einer unteren Halteplatte 14. Über in dem gezeigten Beispiel vier in vertikaler Richtung verlaufende Abstandhalter 16 sind die oberen und unteren Halteplatten 12, 14 miteinander und mit einem zwischen der oberen und unteren Halteplatte 12, 14 etwa mittig angeordneten Tragelement 18 verbunden. Das Tragelement 18 ist in dem gezeigten Beispiel einstückig ausgebildet und besitzt eine in einer horizontalen Ebene, einer Anordnungs- und Erstreckungsebene, liegendes U-Profil. Die untere Halteplatte 14 steht über vier Stützbeine 20 auf dem Untergrund auf. Die Presse besitzt darüber hinaus eine obere Stempelplatte 22 mit einem nicht gezeigten Oberstempel und eine untere Stempelplatte 24 mit einem ebenfalls nicht gezeigten Unterstempel. Zwischen der oberen Stempelplatte 22 und der unteren Stempelplatte 24 ist in dem gezeigten Beispiel eine Matrizenplatte 26 angeordnet mit einer nicht gezeigten Matrize mit einem Formhohlraum für durch die Ober- und Unterstempel zu verpressendes Pulver, beispielsweise Metall- oder Keramikpulver. Die obere Stempelplatte 22, die untere Stempelplatte 24 und die Matrizenplatte 26 sind in dem gezeigten Beispiel über vier vertikale Führungssäulen 28 miteinander verbunden. Die Matrizenplatte 26 ist in dem gezeigten Beispiel an dem Tragelement 18 direkt befestigt.

Die erfindungsgemäße Presse umfasst darüber hinaus zwei obere elektrische Antriebe zum vertikalen Verfahren der oberen Stempelplatte 22 und zwei untere elektrische Antriebe zum vertikalen Verfahren der unteren Stempelplatte 24. Die oberen und unteren elektrische Antriebe sind jeweils auf gegenüberliegenden Seiten des Pressenrahmens 10 angeordnet. Die oberen elektrischen Antriebe umfassen jeweils einen auf der oberen Halteplatte 12 angeordneten oberen elektrischen Antriebsmotor 30, 31 und jeweils einen oberen Spindeltrieb. Die oberen Spindeltriebe umfassen jeweils ein oberes Festlager 32, 33, die jeweils direkt an der Oberseite des Tragelements 18 befestigt sind. Die elektrischen oberen Antriebsmotoren 30, 31 treiben jeweils eine axial feststehende obere Spindel 34, 35 drehend an. Auf den oberen Spindeln 34, 35 ist jeweils eine obere Spindelmutter 36, 37 axial beweglich angeordnet. Bei einer Drehung der oberen Spindeln 34, 35 kommt es somit zu einer axialen Bewegung der jeweiligen oberen Spindelmutter 36, 37. Die oberen Spindelmuttern 36, 37 sind an gegenüberliegenden Enden einer oberen balkenförmigen Kraftübertragungsbrücke 38 befestigt, die mittig über ein weiteres Kraftübertragungselement 40 mit der oberen Stempelplatte 22 verbunden ist. Die oberen elektrischen Antriebe mit ihren oberen elektrischen Antriebsmotoren 30, 31 wirken über die Kraftübertragungsbrücke 38 also seitlich versetzt auf die obere Stempelplatte 22 und damit den Oberstempel.

Der Aufbau der beiden unteren elektrischen Antriebe ist insoweit identisch zu dem Aufbau der beiden oberen elektrischen Antriebe. So weisen die unteren elektrischen Antriebe jeweils einen an der unteren Halteplatte 14 angeordneten unteren elektrischen Antriebsmotor 42, 43 auf, die jeweils eine axial feststehende untere Spindel 44, 45 drehend antreiben. Jeweils ein unteres Festlager 46, 47 der unteren Spindeln 44, 45 ist an der Unterseite des Tragelements 18 direkt befestigt. Wiederum ist auf den unteren Spindeln 44, 45 jeweils eine axial bewegliche untere Spindelmutter 50, 51 angeordnet. Die unteren Spindelmuttern 50, 51 sind wiederum an gegenüberliegenden Enden einer unteren balkenförmigen Kraftübertragungsbrücke 52 angeordnet, die über ein weiteres Kraftübertragungselement 54 mittig mit der unteren Stempelplatte 24 verbunden ist. Treiben die unteren elektrischen Antriebsmotoren 42, 43 die unteren Spindeln 44, 45 drehend an, kommt es wiederum zu einer axialen Bewegung der unteren Spindelmuttern 50, 51, die über die untere Kraftübertragungsbrücke 52 und das Kraftübertragungselement 54 auf die untere Stempelplatte 24 übertragen wird, so dass diese in vertikaler Richtung bewegt wird. Wiederum wirken die unteren elektrischen Antriebe mit ihren unteren elektrischen Antriebsmotoren 42, 43 also über die untere Kraftübertragungsbrücke 52 seitlich versetzt auf die untere Stempelplatte 24 und damit den Unterstempel.

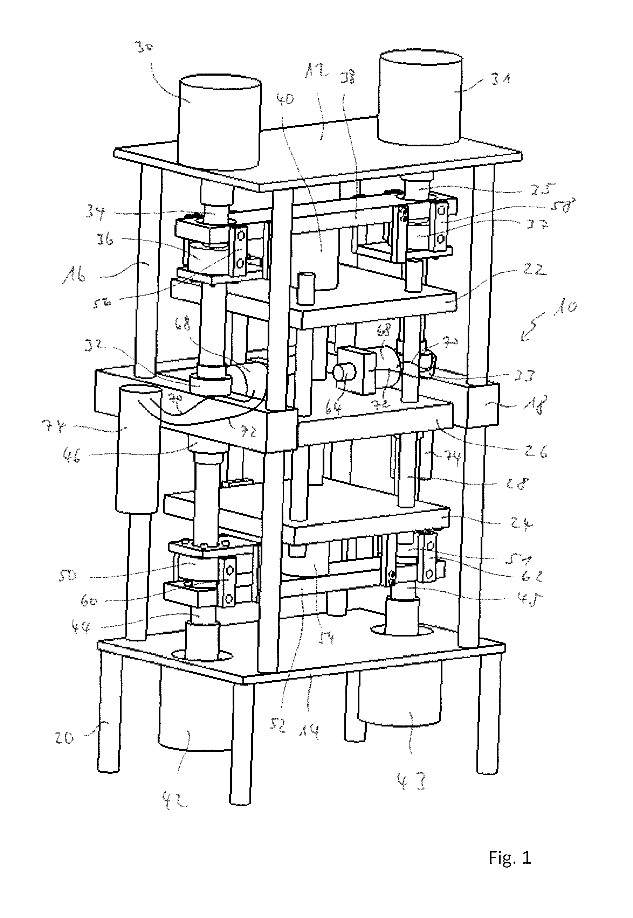

Die Verbindung der oberen Spindelmuttern 36, 37 mit der oberen Kraftübertragungsbrücke 38 erfolgt in dem gezeigten Beispiel über insgesamt vier Ausgleichselemente, von denen in Fig. 1 bei den Bezugszeichen 56, 58 zwei zu sehen sind. Korrespondierende und in ihrer Funktion gleichwirkende Ausgleichselemente sind auf der in Fig. 1 verdeckten Rückseite der Presse jeweils gegenüberliegend zu den Ausgleichselementen 56, 58 angeordnet. Entsprechend sind die unteren Spindelmuttern 50, 51 über insgesamt vier Ausgleichselemente mit der unteren Kraftübertragungsbrücke 52 verbunden, von denen in Fig. 1 wiederum bei den Bezugszeichen 60, 62 zwei zu erkennen sind. Wiederum befinden sich auf der in Fig. 1 nicht zu erkennenden Rückseite der Presse zwei weitere Ausgleichselemente, jeweils gegenüberliegend zu den Ausgleichselementen 60, 62, die hinsichtlich Ausgestaltung und Funktion identisch zu den Ausgleichselementen 60, 62 sind.

Die länglichen Ausgleichselemente 56, 58, 60, 62 sind über erste Drehlager jeweils drehbar an der oberen Kraftübertragungsbrücke 38 bzw. der unteren Kraftübertragungsbrücke 52 gelagert. Über zweite Drehlager sind die Ausgleichselemente 56, 58, 60, 62 jeweils an den oberen bzw. unteren Spindelmuttern drehbar gelagert. Die Drehlager eines Ausgleichselements sind in der in Fig. 1 gezeigten Ruhestellung der Presse jeweils in vertikaler Richtung übereinander angeordnet sind. Die länglichen Ausgleichselemente 56, 58, 60, 62 erstrecken sich mit ihrer Längsachse in diesem Ruhezustand ebenfalls in Vertikalrichtung. Im Zuge eines Pressvorgangs treten enorme Kräfte auf. Diese können zu einem Verbiegen der Kraftübertragungsbrücken 38, 52 führen. Dieses Verbiegen der Kraftübertragungsbrücken 38, 52 führt zu einem Kippen der Ausgleichselemente 56, 58, 60, 62, ermöglicht durch eine Drehung der Ausgleichselemente 56, 58, 60, 62 um ihre Drehlager und somit in Verbindung mit einem Freiraum zwischen den Spindelmuttern 36, 37, 50, 51 und der zugeordneten Kraftübertragungsbrücken 38, 52 zu einem Ausgleich einer Verbiegung der Kraftübertragungsbrücken 38, 52.

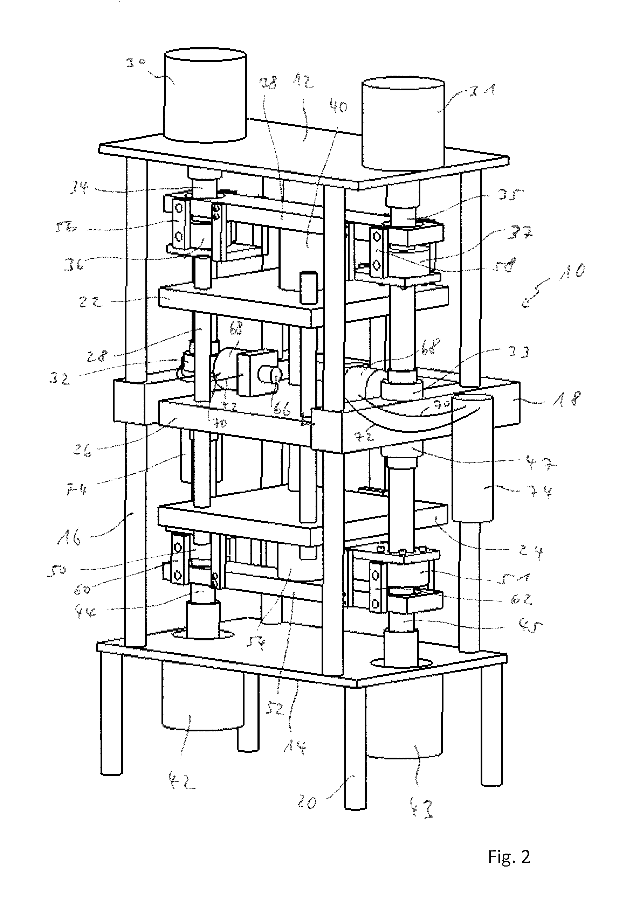

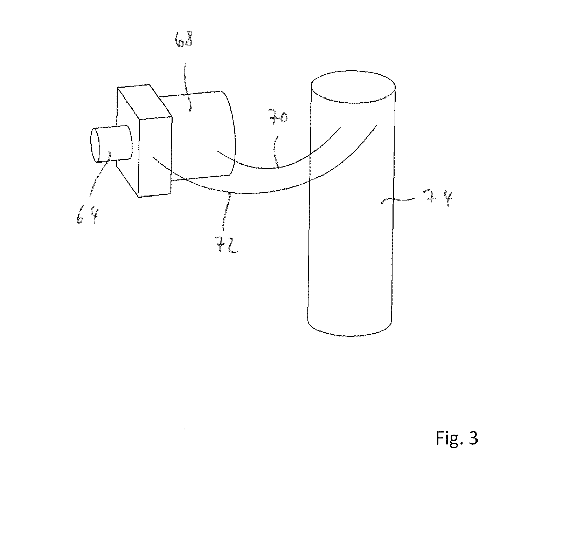

Bei dem in den Figuren gezeigten Ausführungsbeispiel sind darüber hinaus zwei weitere bewegbare Elemente vorgesehen, nämlich die bei den Bezugszeichen 64, 66 gezeigten weiteren Pressstempel, die vorliegend entlang einer quer zur vertikalen Hauptpressachse der Ober- und Unterstempel verlaufenden Querachse bewegbar sind und ebenfalls mit dem Formhohlraum der Matrize zusammenwirken. Auf diese Weise können beispielsweise Queröffnungen, Vertiefungen oder Hinterschnitte in dem in dem Formhohlraum abgebildeten Pressling geformt werden. Die weiteren Pressstempel 64, 66 werden mittels jeweils eines elektrohydrostatischen Antriebs angetrieben. Fig. 3 zeigt zur Veranschaulichung eine vergrößerte Darstellung des weiteren Pressstempels 64 zusammen mit dem ihn antreibenden elektrohydrostatischen Antrieb. Es versteht sich, dass der andere weitere Pressstempel 66 und sein elektrohydrostatischer Antrieb insoweit identisch ausgebildet sind. Der elektrohydrostatische Antrieb umfasst einen bei dem Bezugszeichen 68 gezeigten Hydraulikzylinder. Über je nach Antriebsrichtung des Hydraulikzylinders als Hydraulikzuleitung oder Hydraulikableitung einsetzbare Hydraulikleitungen 70, 72 ist der Hydraulikzylinder 68 mit einem Antriebsblock 74 verbunden. Der Antriebsblock 74 umfasst eine Hydraulikpumpe, die mit einem Speicher für Hydraulikflüssigkeit verbunden ist. Außerdem umfasst der Antriebsblock 74 einen elektrischen Motor, der die Hydraulikpumpe antreibt. Durch die Hydraulikpumpe wird Hydraulikflüssigkeit aus dem Speicher beispielsweise über die in diesem Fall als Zuleitung genutzte Hydraulikleitung 70 zur Betätigung des Hydraulikzylinders 68 gepumpt, wobei die Hydraulikflüssigkeit über die in diesem Fall als Ableitung genutzte Hydraulikleitung 72 von dem Hydraulikzylinder 68 zurück zu der Hydraulikpumpe und in den Hydraulikspeicher abfließen kann. Es ist erkennbar, dass die elektrohydrostatischen Antriebe, insbesondere die Hydraulikzylinder 68 der elektrohydrostatischen Antriebe, ohne Getriebe, insbesondere ohne mechanische Umlenkung, auf die weiteren Pressstempel 64, 66 zur Bewegung derselben wirken. Darüber hinaus ist in den Figuren 1 und 2 zu erkennen, dass die Hydraulikzylinder 68 innerhalb des Pressenrahmens 10 angeordnet sind, während die Antriebsblöcke 74 außerhalb des Pressenrahmens an der Außenseite des Pressenrahmens befestigt sind. Über die flexiblen Hydraulikleitungen 70, 72 besteht die erforderliche Verbindung zur Betätigung der Hydraulikzylinder 68. Es versteht sich, dass weiterhin ein Wegmesssystem für den Hydraulikzylinder 68 vorgesehen ist. Dieses kann in den Hydraulikzylinder integriert oder extern angeordnet sein. Innerhalb des Pressenrahmens 10 wird bei hoher Kraftaufbringung nur ein geringer Bauraum beansprucht. Die Hydraulikzylinder 68 können mit ihrem feststehenden Teil jeweils auf der Matrizenplatte 26 befestigt sein. Außerdem ist in dem gezeigten Ausführungsbeispiel eine nicht näher dargestellte gemeinsame Regeleinrichtung vorgesehen, die zur Regelung sowohl der oberen und unteren elektrischen Antriebseinheiten zum Antreiben der Ober- und Unterstempel entlang der Hauptpressachse als auch zur Regelung der in den Antriebsblöcken 74 der elektrohydrostatischen Antriebe vorgesehenen elektrischen Motoren ausgebildet ist. Es wird somit ein einheitliches regelungstechnisches und sicherheitstechnisches Konzept realisiert.

## Patentansprüche

1. Presse zur Herstellung von Presslingen aus pulverförmigem Material, umfassend mindestens eine Matrize mit einem den Pressling abbildenden Formhohlraum, mindestens einen Oberstempel und mindestens einen Unterstempel, die mit dem Formhohlraum zur Bildung des Presslings zusammenwirken, und mindestens einen elektrischen Antrieb zum Antreiben des Oberstempels und/oder des Unterstempels und/oder der Matrize entlang einer Hauptpressachse, **dadurch gekennzeichnet, dass** die Presse weiterhin mindestens ein auf die Matrize und/oder den Formhohlraum der Matrize wirkendes bewegbares Element umfasst, wobei mindestens ein elektrohydrostatischer Antrieb vorgesehen ist zum Antreiben des mindestens einen bewegbaren Elements.

2. Presse nach Anspruch 1, **dadurch gekennzeichnet, dass** das mindestens eine bewegbare Element mindestens ein Verstellelement zum Verstellen der Matrize und/oder mindestens ein auf den Formhohlraum der Matrize wirkender weiterer Stempel (64, 66) ist.

3. Presse nach einem der Ansprüche 1 oder 2, **dadurch gekennzeichnet, dass** das mindestens eine bewegbare Element mittels des mindestens einen elektrohydrostatischen Antriebs entlang einer unter einem Winkel zur Hauptpressachse verlaufenden Achse, bevorzugt einer quer zur Hauptpressachse verlaufenden Querachse, bewegbar ist.

4. Presse nach einem der Ansprüche 1 oder 2, **dadurch gekennzeichnet, dass** das mindestens eine bewegbare Element ein zusätzlicher Oberstempel und/oder ein zusätzlicher Unterstempel ist, der durch den mindestens einen elektrohydrostatischen Antrieb parallel zur Hauptpressachse bewegbar ist.

5. Presse nach einem der vorhergehenden Ansprüche, **dadurch gekennzeichnet, dass** die Bewegung des mindestens einen elektrohydrostatischen Antriebs zum Antreiben des mindestens einen bewegbaren Elements und die Bewegung des mindestens einen elektrischen Antriebs zum Antreiben des Oberstempels und/oder des Unterstempels entlang der Hauptpressachse durch eine gemeinsame Regelungseinrichtung geregelt wird.

6. Presse nach einem der vorhergehenden Ansprüche, **dadurch gekennzeichnet, dass** der mindestens eine elektrohydrostatische Antrieb ohne mechanische Umlenkung auf das mindestens eine bewegbare Element wirkt.

7. Presse nach einem der vorhergehenden Ansprüche, **dadurch gekennzeichnet, dass** mindestens ein auf das mindestens eine bewegbare Element wirkender Hydraulikzylinder (68) des mindestens einen elektrohydrostatischen Antriebs räumlich getrennt von mindestens einer den mindestens einen Hydraulikzylinder (68) betätigenden Hydraulikpumpe und mindestens einem die Hydraulikpumpe antreibenden elektrischen Motor angeordnet ist, wobei der mindestens eine Hydraulikzylinder (68) und die mindestens eine Hydraulikpumpe über eine Hydraulikzuleitung (70, 72) und eine Hydraulikableitung (70, 72) miteinander verbunden sind.

8. Presse nach Anspruch 7, **dadurch gekennzeichnet, dass** die Hydraulikzuleitung (70, 72) und die Hydraulikableitung (70, 72) flexibel sind.

9. Presse nach einem der Ansprüche 7 oder 8, **dadurch gekennzeichnet, dass** die Presse einen Pressenrahmen (10) aufweist, innerhalb dessen eine die Matrize aufweisende Matrizenplatte (26), der mindestens eine Oberstempel sowie der mindestens eine Unterstempel angeordnet sind, wobei der mindestens eine elektrische Antrieb innerhalb des Pressenrahmens (10) oder an dem Pressenrahmen (10) angeordnet ist, und wobei der mindestens eine Hydraulikzylinder (68) des elektrohydrostatischen Antriebs innerhalb des Pressenrahmens (10) angeordnet ist, und die mindestens eine den mindestens einen Hydraulikzylinder (68) betätigende Hydraulikpumpe sowie der mindestens eine die Hydraulikpumpe antreibende elektrische Motor außerhalb des Pressenrahmens (10) angeordnet sind.

10. Presse nach Anspruch 9, **dadurch gekennzeichnet, dass** der Hydraulikzylinder (68) auf der Matrizenplatte (26) befestigt ist.
